Europäisches Patentamt

European Patent Office

Office européen des brevets

(11) Veröffentlichungsnummer: **0 334 833**
**A1**

## (12) EUROPÄISCHE PATENTANMELDUNG

(21) Anmeldenummer: 89890048.5

(22) Anmeldetag: 21.02.89

(51) Int. Cl.⁴: **C 10 J 3/54**
C 10 J 3/00, F 02 C 3/28

(30) Priorität: 11.03.88 AT 675/88

(43) Veröffentlichungstag der Anmeldung:
27.09.89 Patentblatt 89/39

(84) Benannte Vertragsstaaten:
AT DE GB IT LU SE

(71) Anmelder: **VOEST-ALPINE INDUSTRIEANLAGENBAU GESELLSCHAFT M.B.H.**
**Turmstrasse 44**
**A-4020 Linz (AT)**

(72) Erfinder: **Faltejsek, Karl, Dipl.-Ing.**
**Lüfteneggerstrasse 6**
**A-4020 Linz (AT)**

**Kepplinger, Leopold Werner, Dipl. Ing. Dr.**
**Lahholdstrasse 7**
**A-4020 Linz (AT)**

(74) Vertreter: **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

(54) Verfahren zum Druckvergasen von Kohle für den Betrieb eines Kraftwerkes.

(57) In einem Verfahren zum Druckvergasen von Kohle für den Betrieb eines Kraftwerkes, in welchem das Produktgas größtenteils in wenigstens einer Gasturbinen-Brennkammer (35) verbrannt und über eine Abgasturbine (38) in elektrische und/oder mechanische Energie umgewandelt wird, wird die zu vergasende Kohle (2) ohne vorherige oder anschließende Mahlung in eine Kohlefeinfraktion (11) und eine körnige Kohlefraktion (7) getrennt, wobei die beiden Kohlefraktionen (7,11) in einen Wirbelschichtreaktor (8) an gesonderten Stellen eingebracht werden. Zusätzlich wird in das Wirbelbett Entschwefelungsmittel (9), wie z.B. CaO, MgO, CaCO₃ od.dgl., chargiert, wobei als Vergasungsmittel ein Dampf-Luft-Gemisch, reine Luft oder mit Sauerstoff angereicherte Luft, gegebenenfalls mit rezirkuliertem Produktgas eingesetzt wird und die schmelzflüssige Schlacke (15), vorzugsweise kontinuierlich, abgezogen wird. Durch dieses Verfahren wird der Mahlaufwand für die Kohle vermieden, es kann mit Luft bzw. geringfügig mit Sauerstoff angereicherter Luft das Auslangen gefunden werden und es wird die Schadstoffbelastung des entstehenden Produktgases durch Reaktion des H₂S im Gas mit den Entschwefelungsmitteln wesentlich verringert.

FIG 1

Bundesdruckerei Berlin

Beschreibung

## Verfahren zum Druckvergasen von Kohle für den Betrieb eines Kraftwerkes

Die Erfindung bezieht sich auf ein Verfahren zum Druckvergasen von Kohle für den Betrieb eines Kraftwerkes, in welchem das Produktgas größtenteils in wenigstens einer Gasturbinen-Brennkammer verbrannt und über eine Abgasturbine in elektrische und/oder mechanische Energie umgewandelt wird.

Druckvergasungsverfahren für Kohle für den Betrieb von Kraftwerken sind in verschiedener Ausbildung bekannt. Als dafür besonders geeignet werden in diesem Zusammenhang Flugstromvergaser vorgeschlagen, deren Brennern feingemahlener Kohlestaub gemeinsam mit Sauerstoff hoher Konzentration zugeführt werden muß. Die Verweilzeit bzw. Reaktionszeit bei derartigen Flugstromvergasern ist relativ kurz und die mit derartigen Flugstromvergasern erzielten Vergasungsprodukte enthalten eine Reihe von Schadstoffen, insbesondere Schwefelverbindungen, welche eine aufwendige Nachreinigung des Produktgases erforderlich machen. Diese Flugstromvergaser müssen mit Sauerstoff betrieben werden, um ausreichende Vergasung in diesen kurzen Verweilzeiten sicherzustellen und den Kohlenstoffaustrag mit der Schlacke zu beschränken.

Die Erfindung zielt nun darauf ab, ein Verfahren der eingangs genannten Art zu schaffen, mit welchem gegenüber konventionellen Verfahren kein Mahlaufwand für die Kohle erforderlich ist, und welches mit Luft oder geringfügiger Sauerstoffanreicherung der Luft betrieben werden kann, so daß die Luftzerlegung entfallen kann oder minimiert wird. Weiters zielt die Erfindung darauf ab, das Verfahren trotz dieses verringerten Aufwandes in einer Weise zu führen, daß die Schadstoffbelastung der Produktgase wesentlich verringert wird, so daß ein weitergehender Aufwand für die Produktgasreinigung entfallen kann. Zur Lösung dieser Aufgabe besteht das erfindungsgemäße Verfahren im wesentlichen darin, daß die zu vergasende Kohle ohne vorherige oder anschließende Mahlung in eine Kohlefeinfraktion und eine körnige Kohlefraktion getrennt wird, daß die beiden Kohlefraktionen in einen Wirbelschichtreaktor an gesonderten Stellen eingebracht werden, daß in das Wirbelbett Entschwefelungsmittel, wie z.B. CaO, MgO, $CaCO_3$, od.dgl., chargiert werden, daß als Vergasungsmittel ein Dampf-Luftgemisch, reine Luft oder mit Sauerstoff angereicherte Luft, gegebenenfalls mit rezirkuliertem Produktgas, eingesetzt wird und daß die schmelzflüssige Schlacke, vorzugsweise kontinuierlich, abgezogen wird. Grundsätzlich kann grobgebrochene Kohle eingesetzt werden. Als Kohlefeinfraktion wird vorzugsweise Haftkorn, bevorzugt in einer Wirbelschichttrocknungsstufe, abgetrennt und getrennt an geeigneter Stelle dem Wirbelbett zugeführt. Gleichzeitig wird mit der Verfahrensweise im Wirbelbett eine im Vergleich zum Flugstromvergaser wesentlich längere Verweilzeit der Kohle im Vergasungsreaktor sichergestellt, so daß die Möglichkeit geschaffen wird, Entschwefelungsreaktionen bzw. Maßnahmen zur Beseitigung von Schadstoffen noch im Wirbelschichtreaktor selbst durchzuführen und unmittelbar ein weitgehend von Schadstoffen freies Produktgas abzuziehen. Die verlängerte Verweildauer im Wirbelschichtreaktor erlaubt darüber hinaus, Kohle mit vergleichsweise höheren Feuchtigkeitsgehalten und daher vermindertem Trocknungsaufwand einzusetzen, und es ist in der Regel lediglich eine Antrocknung in demjenigen Ausmaß erforderlich, welche die Bindung zwischen Haftkorn und Grobkorn in den Kohleteilchen zerstört, so daß durch Siebung oder Windsichtung die Gewinnung der zwei gewünschten Kornfraktionen unmittelbar erzielt werden kann. Die Feinfraktion wird dabei zu dem Zwecke getrennt in das Wirbelbett eingebracht, um Haftkorn an den Kohlekörnern nach der Einbringung in den Vergasungsraum zu hindern, abzuspratzen, mit dem Rohgas ausgetragen zu werden und erst im Gasweg, bei bereits abgebauten Temperaturen, zu ent- bzw. vergasen, was zu Phenol-, Teer-, Cyanidusw.Bildung und in der Folge zur Kondensation an Heizflächen bzw. massiver Abwasserbelastung aus dem Wäscher führt. Für die Herstellung der beiden Fraktionen ist kein aufwendiger Mahlprozeß, welcher weitere Energie verbrauchen würde, erforderlich, und es kann im wesentlichen Rohkohle eingesetzt werden, wobei lediglich darauf zu achten wäre, daß die Kornobergrenze nicht wesentlich über 40 - 50 mm liegt. Derartige Kornobergrößen werden von Rohkohle zumeist ohnedies erreicht. Der Aufwand für das Brechen gegebenenfalls größerer Kohleklumpen ist mit Sicherheit wesentlich geringer als der Aufwand, welcher für eine Mahlung feinstkörniger Kohle für einen Flugstromvergaser erforderlich wäre.

Vor allem braucht sauerstoffangereicherte Luft erst dann eingesetzt zu werden, wenn die Kohleeigenschaften, wie hoher Anteil an Flüchtigen, hoher Aschenanteil, hoher Restwasseranteil, sonst bei Luftbetrieb zu ungenügender Wirbelbett-oder Produktgas-Austrittstemperatur führen würden. Steinkohlen mit nicht allzu hohem Anteil an Flüchtigen sind grundsätzlich mit Luft/Dampf zu vergasen, wobei sich im Wirbelbett Temperaturen einstellen, die die Schlacke aufschmelzen und über die darunterliegende bewegungsarme heiße Koksschüttung ablaufen lassen. Auch die Kopftemperaturen reichen dabei aus, um $C_nH_m$ bzw. CHN-Verbindungen zu zerstören.

Schlechtere Kohlen erfordern als Vergasungsmittel den Einsatz von Luft ohne Dampf, mit Sauerstoff angereicherte Luft, oder mit Sauerstoff angereicherte Luft mit rezirkuliertem Produktgas, welches zusätzlich fühlbare Wärme durch Verbrennen erzeugt, um ausreichende Kopftemperaturen zur Zerstörung der obengenannten Verbindungen zu halten.

Die Verwendung eines Wirbelschichtreaktors ermöglicht, wie bereits erwähnt, die weitgehende Entschwefelung innerhalb des Wirbelschichtreaktors und zu diesem Zweck wird erfindungs gemäß in das Wirbelbett selbst bereits Entschwefelungsmittel, wie beispielsweise CaO, MgO od.dgl. chargiert.

Aus dem Produktgas wird Staub vorzugsweise trocken abgeschieden und vorzugsweise gesondert von der Kohlefeinfraktion dem Wirbelschichtreaktor zugeführt. Aufgrund der längeren Verweilzeiten kann gegebenenfalls mit dem Produktgas ausgetragener Staub als weitgehend verkokt angesehen werden und stellt somit ein vergleichsweise höherwertiges staubförmiges Einsatzprodukt dar, welches an sich der Kohlefeinfraktion zugesetzt werden könnte. Mit Rücksicht auf den höheren Brennwert dieses verkokten Materials kann aber mit Vorteil ein derartiger aus dem Produktgas abgeschiedener Staub mit Vorteil unterhalb der Stelle für die Einbringung der Kohlefeinfraktion aufgegeben werden, so daß die exotherme Vergasungsreaktion $C + 1/2O_2 \rightarrow CO$ unmittelbar zur Erzeugung des erforderlichen hohen Temperaturniveaus und damit zur Aufrechterhaltung eines sicheren Schlackenflusses herangezogen werden kann.

Mit Vorteil wird das erfindungsgemäße Verfahren so durchgeführt, daß das Entschwefelungsmittel gemeinsam mit einer der beiden Kohlefraktionen eingebracht wird, wobei naturgemäß zumeist eine Aufgabe gemeinsam mit der grobkörnigen Kohlefraktion von oben bevorzugt ist. Es können auch Materialien zur Entschwefelung herangezogen werden, welche unmittelbar als Entschwefelungsmittel nicht ohne weiteres eingesetzt werden können. Zu diesem Zweck wird mit Vorteil so vorgegangen, daß das Entschwefelungsmittel durch Kalzinieren von Kalkstein und/oder Dolomit gebildet wird und daß das Kalzinieren außerhalb des Vergasers durch Wärmezufuhr über das heiße Produktgas vorgenommen wird, das seinerseits dabei entschwefelt wird. In einfacher Weise wird dabei das heiße, staubbeladene Produktgas durch eine Schüttung karbonatischen Materials durchgeleitet und gibt dabei die Kalzinierwärme ab, wobei das so gebildete CaO bzw. MgO sofort bei optimaler Reaktionstemperatur mit $H_2S$ reagiert.

Um die Staubabscheidung aus dem Produktgas mit bestgeeigneten Einrichtungen zur Abscheidung von Staub, wie beispielsweise metallische Zyklone, zu ermöglichen, wird das Verfahren mit Vorteil so geführt, daß das Produktgas vor der Staubabscheidung über wenigstens einen Wärmetauscher zur Erzeugung von Dampf, vorzugsweise einem Strahlungsverdampfer ohne Einbauten, geführt wird. Durch diesen Dampferzeuger wird eine Kühlung des Produktgases erreicht und es wird an dieser Stelle eine große Menge Hochdruckdampf erzeugt, welche in der Folge über eine Dampfturbine energieliefernd entspannt werden kann.

Um Feinstäube, insbesondere niedrigschmelzende Beläge bildende Alkalien, von den Brennkammern bzw. der Turbinenschaufelung fernzuhalten, wird mit Vorteil so vorgegangen, daß das Produktgas nach weitgehender Abkühlung in Wärmetauschern einer Waschung unterworfen wird, und vor der Einleitung in die Brennkammer(n) der Gasturbine(n) über wenigstens einen Gas/Gaswärmetauscher gegen warmes Produktgas wiedererwärmt wird. Die Endreinigung durch eine Waschung erlaubt gleichzeitig eine intensive Reinigung des zu verbrennenden Produktgases. Als letzter Wärmetauscher vor dem Wäscher führt dabei ein Gas-Gas-Wärmetauscher im Dampfprozeß nicht mehr vorteilhaft einsetzbare fühlbare Wärme in das gewaschene Gas über und diese Wärme kann so in die Brennkammer(n) gebracht werden.

Gemäß einer weiteren bevorzugten Durchführung des erfindungsgemäßen Verfahrens wird so vorgegangen, daß die Kohlefeinfraktion im unteren Teil des Wirbelbettreaktors gemeinsam mit einem Teilstrom des Vergasungsmittels eingeblasen wird. Zu diesem Zweck sind bekannte Einrichtungen wie beispielsweise Ringdüsen für eine gleichmäßige kontinuierliche Einbringung verwendbar. Die bei der Verbrennung bzw. Vergasung im unteren Bereich des Wirbelbettreaktors entstehenden hohen Temperaturen gelangen hiebei zur Aufrechterhaltung der Temperatur für die schmelzflüssige Phase der Schlacke zur Wirkung und die eingeblasenen Gase dienen in der Folge der Erzielung einer stabilen Wirbelschicht bzw. eines stabilen Wirbelbettes oberhalb der Einblasebene.

Die Aufteilung der Einsatzkohle in eine Kohlefeinfraktion und eine körnige Kohlefraktion gemeinsam mit dem durch die Verwendung eines Wirbelschichtreaktors erzielbaren Vorteilen, insbesondere den Vorteilen einer weitgehenden Entschwefelung im Reaktor, lassen sich besonders gut dann verwirklichen, wenn so vorgegangen wird, daß die Kohlefeinfraktion durch Siebung oder Sichtung auf eine Korngröße $\leq$ 0,5 mm, vorzugsweise $\leq$ 0,3 mm hergestellt wird und daß der Siebüberlauf als körnige Kohlefraktion eingesetzt wird. Für die Abtrennung einer derartigen Kohlefeinfraktion ist eine einfache Siebung ausreichend, wobei durch die vorangehende Vortrocknung lediglich sichergestellt werden muß, daß die Bindung zwischen Haftkorn bzw. an stückiger Kohle anhaftendem Feinkorn so weit gelockert ist, daß durch einfache Siebvorgänge, wie Rüttelsiebe die gewünschte Trennung in die beiden Kornfraktionen erzielt werden kann. In bevorzugter Weise wird bei der Trennung der Kohle in eine Kohlefeinfraktion und eine körnige Fraktion jedoch so vorgegangen, daß die Kohlefeinfraktion durch den Staubaustrag einer Wirbelbett-Trocknung der Kohle gebildet wird, und daß der Korndurchgang der Wirbelbett-Trocknung als körnige Kohlefraktion dem Vergaser zugeführt wird.

Bei Kohlevergasern ist es wünschenswert, die Schlacke flüssig abzuziehen. Es ist bereits bekannt, derartige flüssige Schlacke unmittelbar nach dem Austritt im Wasserbad bzw. -strahl zu granulieren. Im Rahmen des erfindungsgemäßen Verfahrens ist nun besonders vorteilhaft, den auf diese Weise gebildeten Dampf im Rahmen des Verfahrens weiterzuverwenden. Die Schlacke wird schmelzflüssig und kontinuierlich aus dem Wirbelschicht- bzw. Wirbelbettreaktor unter Druck ausgebracht und mit Vorteil in ein unter gleichem Druck stehendes Gefäß übergeführt. Gemäß einer bevorzugten Verfahrensweise wird hiebei so vorgegangen, daß die abgezogene flüssige Schlacke unter gleichem Druck wie im Vergaser mit Wasser granuliert wird und daß der bei der Granulation der ablaufenden Schlacke entstehende Dampf als Vergasungsmittel in den Vergaser eingebracht und/oder ganz oder teilweise im Wärmetausch gegen verdampfendes Wasser kondensiert und in die Schlackengranulation zurückgeführt wird.

Größere Kraftwerksblöcke werden zweckmäßigerweise mit zwei Druckvergasern ausgeführt, die einzeln mit Dampferzeugern zur Kühlung des Produktgases, Wäschern usw. jeweils mit einer Gasturbine zusammengeschaltet werden. Zur Verarbeitung des Dampfes aus Gaskühlung und aus dem (den) Abhitzekessel(n) nach den Gasturbinen ist ein gemeinsamer Dampfturbosatz vorgesehen.

Der (die) Vergaser bzw. Wirbelschichtreaktoren liefern zufolge des Luftbetriebes ein heizwertschwaches Gas, das bei der Verbrennung in Gasturbinenbrennkammern relativ wenig Kühlluft, zusätzlich zu der für die stöchiometrische Verbrennung notwendigen Luft, benötigt. Der Verdichter gängiger, für die Verbrennung von Erdgas oder Heizöl konstruierter Gasturbinen ist also zu groß. Um trotzdem diese bewährten Maschinen ohne aufwendigen und nicht problemlosen Umbau einsetzen zu können, wird mit Vorteil so vorgegangen, daß das Produktgas größtenteils in den Brennkammern einer oder mehrerer, vorzugsweise zwei, Gasturbinen verbrannt wird, daß aus der (den) Brennkammer(n) heiße Luft entnommen und dem Wirbelbettreaktor, einer Luftzerlegung zur Erzeugung von Stickstoff als Inertgas und Sauerstoff zur Anreicherung der Vergasungsluft und gegebenenfalls einer Heißluft-Entspannungsturbine zugeführt wird. Die heiße Druckluft wird dabei bei Temperaturen von ca. 440 bis 470°C und einem Druck von ca. 15 bis 17 bar der (den) Brennkammer(n) entnommen, bevor sie mit Produktgas oder Verbrennungsabgasen in Kontakt kommt. Die Möglichkeit, Druckluft unmittelbar einer Luftzerlegung zuzuführen, ist im vorliegenden Verfahren nicht im Hinblick auf die Erzeugung angereicherten Sauerstoffes von besonderer Bedeutung, sondern vielmehr im Hinblick auf die Erzeugung eines geeigneten Inertgases als Schleusgas für die Material-Druckschleusen od.dgl., da ja das erfindungsgemäße Verfahren zum Unterschied von den bekannten Verfahren ohne Verwendung von Reinsauerstoff auskommt. Die Zerlegungsprodukte können hiebei in vorteilhafter Weise so verwendet werden, daß aus der Luftzerlegungsanlage Sauerstoff mit einer Konzentration von etwa 90 Vol.-% dem Vergasungsmittelstrom zugesetzt wird und daß Stickstoff über Verdichter als Schleusgas für die Druckschleusen zur Einbringung von Kohle und Zuschlägen wie z.B. CaO od.dgl., zum Ausbringen granulierter Schlacke, sowie zum Inertisieren od.dgl. verwendet wird. Vor der Luftzerlegung wird die Heißluft unter Erzeugung von Dampf gekühlt und dieser Dampf gemeinsam mit anderen Dampfströmen aus dem Prozeß der Dampfturbine zugeführt.

In besonders einfacher Weise wird bei Einsatz des aus der Brennkammer abgezogenen Teilstromes im Wirbelstromreaktor so vorgegangen, daß der dem Wirbelbettreaktor zugeführte Teilstrom der Heißluft einer Verdichtung, vorzugsweise ohne vorherige Kühlung und anschließende Wiedererwärmung unterworfen wird. Der für die Verwendung als Vergasungsmittel bestimmte Heißluft-Teilstrom muß nachverdichtet werden, um die Widerstände aus Düsen, Wirbelbett, Wärmetauscher, Wäscher, Gasturbinen-Brenner usw. zu überwinden.

Es wird dazu der Heißluft-Teilstrom mit Vorteil nicht gekühlt, verdichtet und wiedererwärmt, sondern direkt in den Nachverdichter eingesetzt, den er mit einer Temperatur um 500°C verläßt, worauf dieser Heißluft-Teilstrom ohne weitere Aufwärmung als Vergasungsmittel dient.

Ein besonders kritischer Moment beim Betrieb von Wirbelschichtreaktoren ist der Anfahrbetrieb. Bei der Inbetriebsetzung muß dafür Sorge getragen werden, daß die gewünschten Temperaturprofile bzw. Temperaturverlauf über die Schichtdicke rasch erreicht wird und daß stabile Bedingungen für die Aufrechterhaltung eines Wirbelbettes eingehalten werden können. Hiezu ist es zum einen erforderlich dafür Sorge zu tragen, daß die anfallende Schlacke tatsächlich abfließen kann und es muß daher für eine hinreichend große Temperatur im Sumpf Sorge getragen werden. Im Anfahrbetrieb empfiehlt es sich daher, im Sumpfbereich zusätzliche Wärme einzubringen, was beispielsweise durch Anwendung gesonderter Brenner für das Aufschmelzen des Schlackenkanales möglich ist. Dabei wird mit Vorteil so vorgegangen, daß für die Inbetriebsetzung des Wirbelschichtreaktors Trockenkohle oder Koks im Vergaserunterteil aufgegeben, über Brenner im Schlackenablauf aufgeheizt, mit Überschußluft des/der Brenner gezündet bzw. verbrannt wird, und derart die Bedingungen für den Schmelzfluß der Schlacke hergestellt werden.

Eine größtmögliche Stromerzeugung kann dadurch erzielt werden, daß gegebenenfalls durch Verbrennen eines Gasteilstromes zusätzlich erhitztes Turbinenabgas in einem Abhitzekessel zur Hochdruck- und Niederdruckdampferzeugung eingesetzt wird, daß dieser Hochdruckdampf gemeinsam mit dem aus der Kühlung des Gasstromes nach dem Vergaser stammenden Hochdruckdampf in einer Dampfturbine eingesetzt wird, daß der so erzeugte Niederdruckdampf gemeinsam mit den Niederdruckdampfströmen aus der Produktgaskühlung, der Rückkühlung der Kühlflüssigkeit für die Vergasungsmitteldüsen, den Vergasermantel usw. und gegebenenfalls der Schlackenkühlung ebenfalls in der Dampfturbine eingesetzt wird, daß der Dampfturbine zwischen diesen beiden Druckstufen geregelt Dampf zur Einspeisung in die Brennkammer der Gasturbine und zur Herstellung des zusätzlich zur Vergasungsluft als Vergasungsmittel eingesetzten Dampfes entnommen wird, daß diese Dampfströme in der Dampfturbine arbeitsleistend entspannt werden und daß das Abgas aus diesem Dampferzeuger ganz oder teilweise, gegebenenfalls zusammen mit entspannter Heißluft als Wärmeträgergas zur Kohletrocknung geführt wird, wobei insbesondere die Nutzung verschiedener Temperaturniveaus zur Erzeugung von Niederdruck- und Hochdruckdampf und entsprechende Dampfturbinen, welche die Anspeisung mit verschiedenen Druckniveaus erlauben, eine weitgehend vollständige Nutzung der Prozeßwärme und der durch die Vergasungsreaktion zur Verfügung gestellten Energie möglich wird.

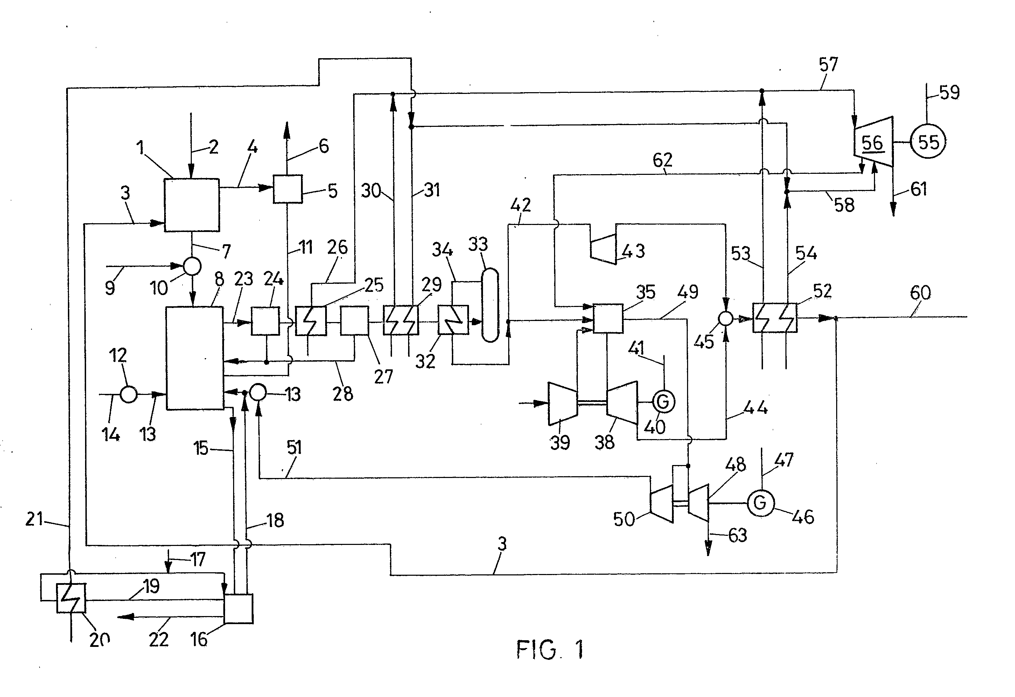

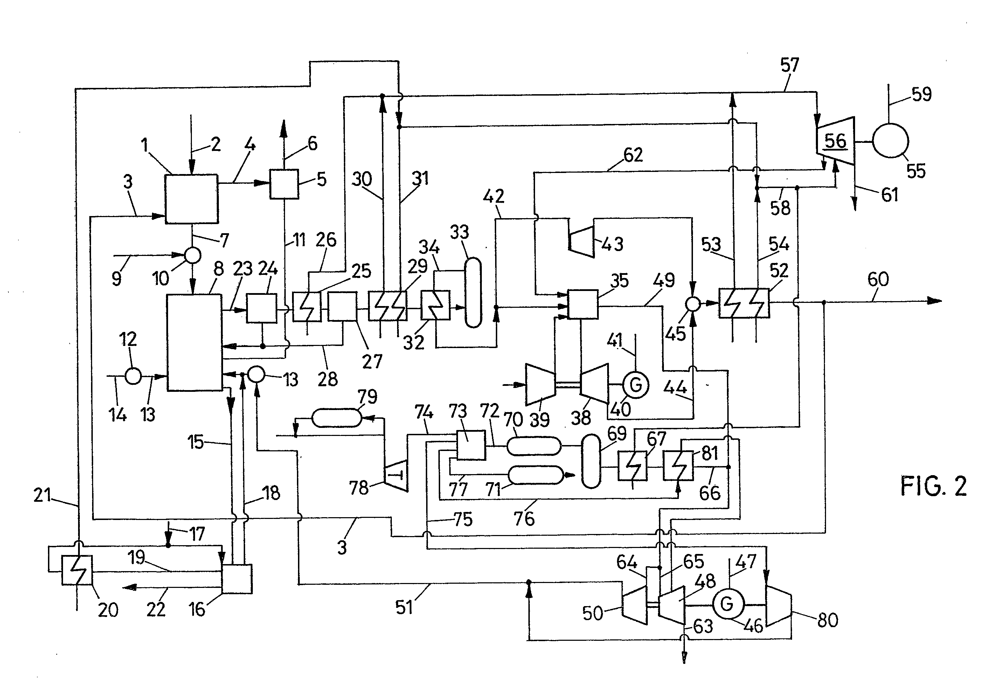

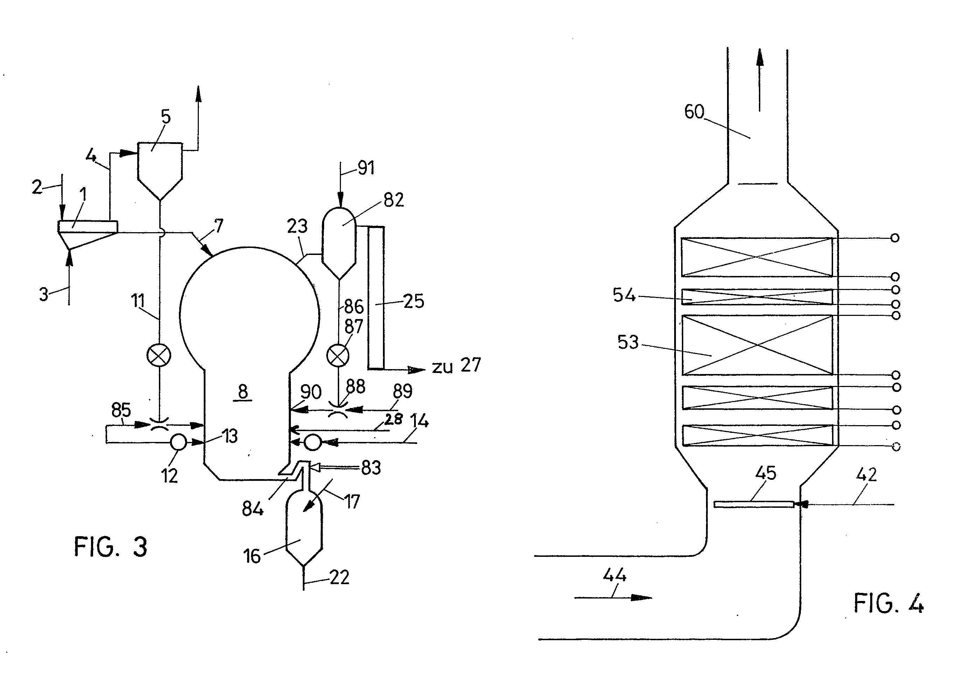

Die Erfindung wird nachfolgend an Hand eines in der Zeichnung dargestellten Ausführungsbeispieles näher erläutert. In dieser zeigen Fig.1 ein Blockschema eines Kraftwerkes zur Durchführung des erfindungsgemäßen Verfahrens, Fig.2 ein Blockschema einer abgewandelten Ausführungsform eines Kraftwerkes zur Durchführung des Verfahrens gemäß der Erfindung, Fig.3 eine schematische Darstellung eines Wirbelschichtreaktors zum Einsatz in einem Kraftwerk gemäß Fig.1 oder 2 und Fig.4 eine schematische Darstellung eines Dampferzeugers zur Verwendung in einem Kraftwerk gemäß Fig.1 oder 2.

In Fig.1 ist ein Blockschema einer Kohledruckvergasungsanlage für ein Kohledruckvergasungskraftwerk auf Basis mittelflüchtiger Steinkohle dargestellt. Hiebei wird einer Kohletrocknung 1 Rohkohle 2 zugeführt, wobei diese Rohkohle in der Kohletrocknung 1 entweder auf eine Restfeuchte von 5 - 7 % oder ungeachtet der Anfangsfeuchte um etwa 2 - 3 % Feuchteabbau vorgetrocknet wird. Diese Vortrocknung erfolgt dabei mit warmem Gas, welches über 3 der Kohletrocknung zugeführt wird. Durch die Trocknung auf die angegebenen Werte bzw. die geringfügige Antrocknung wird feines Haftkorn von der körnigen Kohlefraktion abgeschieden und über 4 abgezogen. Die Kohlefeinfraktion wird dabei in einem Filter 5 als Staubfraktion rückgewonnen, wobei die Brüden 6 gereinigt in einen Kamin abgegeben werden. Die körnige Kohlefraktion wird in vorgetrocknetem Zustand über 7 einem Wirbelbettreaktor 8 aufgegeben, wobei der körnigen Kohlefraktion 7 Kalksplit oder Dolomit über einen Dosierer 10 zugegeben wird. Der Einschmelzvergaser wird bei Drücken von etwa 16 bis 18 bar betrieben und es muß daher die körnige Kohlefraktion 7 mit dem zugegebenen Entschwefelungsmittel 9 über Druckschleusen dem Einschmelzvergaser aufgegeben werden, wobei diese Druckschleusen der Einfachheit halber nicht dargestellt sind. Neben der körnigen Kohlefraktion 7 wird die im Filter 5 abgeschiedene Kohlefeinfraktion 11 im Bereich des Wirbelbettes des Wirbelbettreaktors 8 eingebracht. Als Vergasungsmittel wird dem Wirbelbettreaktor 8 über eine schematisch angedeutete Ringleitung 12 über Düsen 13 Luft zugeführt, wobei neben der Verwendung von Luft als Vergasungsmittel auch mit Sauerstoff angereicherte Luft gegebenenfalls unter Zusatz von Dampf Verwendung findet, wie dies im folgenden noch erläutert werden wird. Die sich am Boden des Wirbelbettreaktors 8 ansammelnde schmelzflüssige Schlacke wird kontinuierlich über 15 abgezogen und unter dem gleichen Druck, wie er im Wirbelbettreaktor 8 herrscht, in einem Granuliergefäß 16 durch Zugabe von Wasser 17 granuliert. Der dabei entstehende Dampf wird teilweise bei 18 abgezogen und dem Vergasungsmittel beigemischt. Ein weiterer Teil des bei der Granulation entstehenden Dampfes wird über eine Leitung 19 abgezogen und über einen Wärmetauscher 20 geführt und kondensiert und wiederum zur Granulierung von Schlacke rückgeführt. Der im Wärmetauscher 20 erzeugte reine Niederdruckdampf wird dabei über eine Leitung 21 abgezogen, wobei auf die Verwendung dieses Niederdruckdampfes im folgenden näher eingegangen werden wird. Aus dem unter Überdruck stehenden Schlackengranulierungsgefäß 16 wird weiters Schlacke über eine Leitung 22 und nicht näher dargestellte Druckschleusen abgezogen.

Aus dem Wirbelbettreaktor 8 wird im Bereich des Kopfes über eine Leitung 23 Produktgas abgezogen, wobei in einem Vorzyklon 24 eine Abscheidung von Grobstaub erfolgt und dieser Grobstaub dem Wirbelschichtreaktor 8 rückgeführt wird, wie dies bei 28 angedeutet ist. Das vorgereinigte Produktgas aus dem Vorzyklon 24 gelangt anschließend in einen Wärmetauscher 25, aus welchem über eine Leitung 26 Hochdruckdampf abgezogen wird. Nach einer ersten Abkühlung des Produktgases im Wärmetauscher 25 gelangt dieses in einen zweiten Zyklon 27, in welchem eine weitgehende Reinigung des Produktgases von mitgeführtem Staub erfolgt und dieser Staub über eine Leitung 28 ebenso wie der aus dem Vorzyklon 24 rückgeführte Grobstaub dem Wirbelschichtreaktor 8 zugeführt wird. Nach der Reinigung im Zyklon 27 erfolgt eine weitere Abkühlung des Produktgases in einem Dampferzeuger 29, aus welchem sowohl Hochdruckdampf 30 als auch Niederdruckdampf 31 abgezogen wird. Um allenfalls im Produktgas noch enthaltene Schadstoffe, insbesondere Alkalienverbindungen, zu entfernen, gelangt das Produktgas nach Passieren eines Gas-Gaswärmetauschers 32 in einen Wäscher 33, worauf aus dem Wäscher 33 bei 34 abgezogenes gereinigtes Produktgas, welches ein für die Weiterverwendung relativ niedriges Temperaturniveau aufweist, im Gas-Gaswärmetauscher 32 gegen warmes Produktgas wieder erwärmt wird, bevor es zum größten Teil einer Brennkammer 35 zugeführt wird.

In der Brennkammer 35 wird das gereinigte Produktgas gemeinsam mit dem über 31 zugeführten Dampf und verdichteter Luft 36 verbrannt, wobei die aus der Brennkammer 35 abgezogenen Abgase 37 einer Gasturbine 38 zugeführt werden. Diese Gasturbine 38 ist einerseits mit einem Verdichter 39 zur Erzeugung von Hochdruckluft 36 und einem Generator 40 zur Erzeugung von elektrischer Energie gekoppelt, wie dies durch 41 angedeutet ist. Derartige Systeme von gekoppelten Verdichtern 39, Gasturbinen 38 und Generatoren 40 mit einer Brennkammer 35 zur Verbrennung der für den Betrieb der Gasturbine 38 erforderlichen Gase, sind meist für den Einsatz von Erdgas bzw. Erdöl als Einsatzmittel in der Brennkammer 35 ausgelegt. Da das Produktgas aus dem Reaktor 8 einen geringeren Heizwert als Erdöl bzw. Erdgas aufweist und somit eine größere Produktgasmenge zur Erzeugung des für den Betrieb der Gasturbine 38 nötigen Gasstromes 37 erforderlich ist, bestünde prinzipiell die Möglichkeit, die eingesetzte Menge verdichteter Luft 36 durch Modifikationen des Verdichters 39 zu reduzieren, da nur eine gewisse Gasmenge in der Gasturbine 38 abgearbeitet werden kann. Derartige Modifikationen eines Verdichters erweisen sich jedoch teurer und auch hinsichtlich anderer Bauteile der Gasturbine problematisch, so daß ein Teilstrom 49 verdichteter heißer Luft entnommen, und einerseits über den Nachverdichter 50 als Vergasungsmittelstrom 51 zum Wirbelschichtreaktor 8 gefördert wird, andererseits, was in Fig.1 nicht dargestellt ist, gekühlt und zur Erzeugung von Stickstoff als Schleus- und Inertisierungsgas zerlegt wird und der Rest über eine Heißluft-Entspannungsturbine 48 arbeitsleistend entspannt wird. Die Turbine 48 treibt zweckmäßigerweise den Nachverdichter 50 und, mit ihrer Überschußleistung, den Generator 46 an, dessen elektrische Leistung symbolisch mit 47 angedeutet ist.

Die Verbrennung eines über die Expansionsturbine 43 entspannten Gasstromes 42 im Abgasstrom 44 aus der Turbine 38 mit dem darin noch enthaltenem Sauerstoff mittels des Brenners 45 erfolgt vor allem im Hinblick auf eine geringfügige Anhebung des Temperaturniveaus des Gases aus der Gasturbine, um in einem nachgeschalteten Dampferzeuger 52 Hochdruckdampf 53 optimaler Temperatur und anschließend Niederdruckdampf 55 herzustellen. Der derart erzeugte Hochdruckdampf 53 wird gemeinsam mit dem in den Wärmetauschern 25 bzw. 29 erzeugten Hochdruckdampf 26 bzw. 30 einer Dampfturbine 56 zugeleitet. Diese Dampfturbine ist derart ausgebildet, daß auch der im Wärmetauscher 52 erzeugte Niederdruckdampf 54, der im Dampferzeuger 29 erzeugte Niederdruckdampf 31 sowie der nach der Schlackengranulation erzeugte Mitteldruckdampf 21 der Dampfturbine 56 eingespeist werden kann, wie dies durch die zwei getrennten Zuleitungen 57 und 58 angedeutet ist. Die durch Kopplung der Dampfturbine 56 mit einem Generator 55 erzeugte elektrische Energie wird dabei bei 59 abgegeben. Aus der Dampfturbine 56 wird an geeigneter Stelle Dampf 62 für die Gasturbinenbrennkammer 35 geregelt entnommen und dort mit dem Produktgas zur Minimierung der Bildung thermischer Stickoxyde eingesetzt. Die Kondensation des mit 61 angedeuteten Abdampfstromes ist nicht näher dargestellt.

Das aus dem Dampferzeuger 52 abgezogene und abgekühlte Gas wird entweder bei 60 in den Kamin abgeführt oder es wird zumindest ein Teilstrom desselben als Einsatzgas 3, gegebenenfalls gemeinsam mit warmer Abluft 63 aus der Heißluftentspannungsturbine 48 in der Kohletrocknung 1 verwendet, wobei dieses Trocknungsgas nach dem Wärmetauscher 52 ein ausreichend hohes Temperaturniveau für eine Trocknung der Kohle im gewünschten Ausmaß ohne zusätzliche Zufuhr von Wärme aufweist.

In Fig.2 ist eine abgewandelte Ausführungsform eines Kraftwerkes dargestellt, in dem schlechtere Kohle (aschenreichere, höherflüchtige Steinkohle) eingesetzt wird, die als Vergasungsmittel sauerstoffangereicherte Luft benötigt. Die Bezugszeichen aus Fig.1 für gleiche Anlagenteile wurden beibehalten.

Ebenso wie in Fig.1 wird ein Teilstrom 49 verdichteter heißer Luft der Gasturbinenbrennkammer entnommen, jedoch wie folgt weiterverarbeitet: ein Teilstrom 64 wird im Nachverdichter 50 als Vergasungsmittelstrom 51 komprimiert; ein Teilstrom 65 über die Heißluftexpansionsturbine 48 arbeitsleistend entspannt und als Warmluft 63, gemeinsam mit einem Abgasteilstrom aus dem Dampferzeuger 52, als Trocknungsgas 3 zur Kohletrocknung 1 geführt; ein Teilstrom 66 wird nach Kühlung im Dampferzeuger 67, der Niederdruckdampf 68 erzeugt, welcher über die Niederdruckeinspeisung 58 in die Dampfturbine 56 geführt wird, im Waschkühler 69 gekühlt und gereinigt und im Molsieb 70 von Kohlensäure, Wasserdampf usw. befreit. Die gereinigte Luft 72 gelangt in die eigentliche Tieftemperatur-Luftzerlegung 73, die folgende Produktteilströme erzeugt:

Hochdruck-Stickstoff 74, mit $N_2$-Konzentration über 99 %

Mitteldruck-Sauerstoff 75, mit ca. 90 % $O_2$-Konzentration

Mitteldruck-Stickstoff 76 und

Niederdruck-Stickstoff 77, mit jeweils ca. 1 bis 2 % Rest-$O_2$

Der Hochdruck-Stickstoff 74 wird in einem einstufigen Kolbenverdichter 78 nachverdichtet und als Schleusgas bzw., gespeichert im Druckgasspeicher 79, für die Inertisierung des Vergasers 8 und des Gassystems für Störfälle bevorratet.

Mitteldruck-Sauerstoff 75 wird im Verdichter 80 komprimiert und der Vergasungsluft 51 beigemischt.

Mitteldruck-Stickstoff 76 wird in einem Gas-Gaswärmetauscher 81 gegen Heißluft erwärmt und an geeigneter Stelle in die Heißluft-Entspannungsturbine 48 eingespeist und in dieser arbeitsleistend entspannt. Der Abgasstrom 63 weist demnach geringere Sauerstoffkonzentration auf als Luft.

Niederdruck-Stickstoff 77 wird zur Desorption des Molsiebes 71 verwendet, das nach erfolgter Desorption die Funktion des adsorbierenden Molsiebes 70 übernimmt, wogegen das zweite Molsieb 70 auf Desorption geschaltet wird. Zuvor hat der Stickstoffteilstrom 77 in arbeitsleistender Entspannung bei tiefen Temperaturen im Luftzerleger 73 Kälte zur Deckung dessen Kälteverluste erzeugt, was hier der Übersichtlichkeit halber nicht dargestellt ist.

Wird in der Luftzerlegungsanlage nur Schleusgas-Stickstoff erzeugt, so verbleibt der größere Teil der Heißluftentnahme für die Heißluft-Entspannungsturbine 48.

Für Kohlen mit hohen Aschegehalten, für die mit Sauerstoff angereicherte Luft als Vergasungsmittel notwendig ist, kann auch der gesamte Rest-Heißluftstrom gekühlt und in der Zerlegungsanlage 73 zerlegt werden. Dabei entsteht Rein-Stickstoff und zweckmäßigerweise Sauerstoff mit 90 %. Stickstoff muß von etwa 13 bis 15 bar auf etwa 20 bar und Sauerstoff von etwa 6 bar auf etwa 19 bar verdichtet werden.

Dagegen fällt bei ausschließlicher Stickstoff-Erzeugung als Schleusgas dieser mit etwa 11 bar und einer Konzentration über 99 % und als Abfall Sauerstoff drucklos mit etwa 60 bis 70 % an. Dieser wird verworfen oder vor den Gasturbinen-Luftverdichter 39 geführt, der dann Luft mit einer Sauerstoffkonzentration zwischen 21 und 22 % ansaugt.

In Fig.3 ist der Wirbelschichtreaktor wiederum mit 8 bezeichnet. Diesem Reaktor wird dabei die körnige Kohlefraktion 7 aus der Kohletrocknung 1 im Bereich des Kopfes zugeführt, während die Kohleinfraktion 4 nach Passieren des Filters 5 über die Leitung 11 dem Reaktor 8 gemeinsam mit einem Teilstrom 85 der Vergasungsluft 14 zugeführt wird, die über Ringleitung 12 und den Düsen 13 im Unterteil des Reaktors 8 diesem dosiert zugeführt wird. Neben der Zugabe der körnigen Kohlefraktion, welche nach Passieren eines Siebes anfällt, kann im Bereich des Kopfes des Reaktors auch das Entschwefelungsmittel dem Reaktor zugeführt werden. Im Bereich des Fußes des Reaktors 8 befindet sich ein Schlackenabzug 84, wobei in diesem Bereich ein zusätzlicher Brenner 83 vorgesehen sein kann, um Unterbrechungen des Schlackenflusses zu vermeiden. Die Schlacke gelangt aus dem Kanal 84 in das Granuliergefäß 16, wobei die Zufuhr von Wasser zum Granulieren der Schlacke schematisch wiederum mit 17 und der Schlackenabzug mit 22 angedeutet ist.

Im Bereich des Kopfes wird aus dem Reaktor 8 das Produktgas 23 mit einer Temperatur von beispielsweise 1000°C abgezogen, wobei die Abkühlung des Produktgases auf eine Temperatur von etwa 650°C vor dem Eintritt in den Zyklon 27 in einem Strahlungskühler 25 erfolgt. Bei einer Anordnung, wie sie in Fig.3 dargestellt ist, wird das Entschwefelungsmittel durch Kalzinieren vom Kalkstein und/oder Dolomit gebildet, wobei das karbonatische Material in einem Schacht 82 im Gegenstrom von heißem Produktgas durchströmt wird, das dabei nicht nur die Kalzinierwärme abgibt, sondern dabei wirksam entschwefelt wird. Produktgas 23 durchströmt von unten nach oben den Kalzinierschacht 82, der von oben mit karbonatischem Material 91 beschickt wird. In der Leitung 86 befindet sich somit ein Gemisch von verbrauchtem und unverbrauchtem Entschwefelungsmittel sowie Feinkoks und Asche, das mit einem Zuteiler 87 über eine Düse 88 mit Inertgas (Stickstoff) 89 durch eine Düse 90 in den Unterteil des Schachtes 8 eingeblasen wird. Wie aus Fig.3 weiters ersichtlich,wird der im Zyklon 27 abgeschiedene, weitgehend verkokte Staub an einer Stelle unterhalb der Einbringungsstelle der Kohlefeinfraktion in den Reaktor 8 eingebracht, so daß der höhere Brennwert dieses bereits verkokten Staubes für die Aufrechterhaltung eines geeigneten Temperaturprofiles im Wirbelschichtreaktor herangezogen werden kann.

Bei guten Kohlen ist die Verwendung von karbonatischem Material als Entschwefelungsmittel und dessen Aufgabe gemeinsam mit der stückigen Kohlefraktion möglich, da es unproblematisch ist, die Kalzinierwärme im Hochtemperaturteil des Vergasers aufzubringen. Die Entschwefelungsreaktion hat im Wirbelbett auch ausreichend Zeit, um fast ideale Temperatur vorauszusetzen. Bei schlechteren Kohlen oder sehr hohem Kalk-/Dolomitsteinverbrauch ist der externe Schacht 82 zweckmäßiger. Im Vergaser läuft dann allerdings keine nennenswerte Entschwefelungsreaktion mehr ab, da diese größtenteils im Kalzinierschacht erfolgt.

Bei der Darstellung gemäß Fig.4 ist der Austrittskanal der nicht näher dargestellten Gasturbine mit 44 bezeichnet, wobei in diesem Austrittskanal über Brenner 45 eine Anhebung der Abgastemperatur aus der Gasturbine von etwa 550°C auf nahe 600°C erfolgt, um in dem als Zwangsumlaufverdampfer ausgebildeten Abhitzekessel bzw. Dampferzeuger 52 noch Dampf mit thermodynamisch günstiger Temperatur von etwa 535°C erzeugen zu können. Dabei wird den Brennern 45 entspanntes Druckgas 42 zugeführt, wie dies in Fig.1 näher erläutert worden war. Im Abhitzekessel 52 erfolgt eine Erzeugung von Dampf auf mehreren Temperatur- bzw. Druckniveaus, wie dies schematisch durch die Systeme 53, 54 in Fig.4 angedeutet ist. Die anderen angedeuteten Heizflächen stellen beispielsweise Speisewasservorwärmer bzw. Überhitzer dar, wobei sich die Anzahl der zusätzlichen Heizflächen nach den Erfordernissen für die Dampferzeugung bzw. übrigen Wärmeträger richtet. Dampf mit unterschiedlichem Druck wird darauf der Dampfturbine zur Erzeugung von elektrischer Energie zugeführt, wie dies zu den Fig.1 und 2 ausdrücklich erläutert worden ist.

## Patentansprüche

1. Verfahren zum Druckvergasen von Kohle für den Betrieb eines Kraftwerkes, in welchem das Produktgas größtenteils in wenigstens einer Gasturbinen-Brennkammer (35) verbrannt und über eine Abgasturbine (38) in elektrische und/oder mechanische Energie umgewandelt wird, dadurch gekennzeichnet, daß die zu vergasende Kohle ohne vorherige oder anschließende Mahlung in eine Kohlefeinfraktion (11) und eine körnige Kohlefraktion (7) getrennt wird, daß die beiden Kohlefraktionen (7,11) in einen Wirbelschichtreaktor (8) an gesonderten Stellen eingebracht werden, daß in das Wirbelbett Entschwefelungsmittel (9), wie z.B. CaO, MgO, $CaCO_3$ od.dgl., chargiert werden, daß als Vergasungsmittel (13) ein Dampf-Luft-Gemisch, reine Luft oder mit Sauerstoff angereicherte Luft, gegebenenfalls mit rezirkuliertem Produktgas eingesetzt wird und daß die schmelzflüssige Schlacke (15,84), vorzugsweise kontinuierlich, abgezogen wird.

2. Verfahren nach Anspruch 1, dadurch gekennzeichnet, daß aus dem Produktgas Staub trocken abgeschieden wird und vorzugsweise gesondert (28) von der Kohlefeinfraktion (11) dem Wirbelschichtreaktor (8) zugeführt wird.

3. Verfahren nach Anspruch 1 oder 2, dadurch gekennzeichnet, daß das Entschwefelungsmittel (9) gemeinsam mit einer der beiden Kohlefraktionen (7,11) eingebracht wird.

4. Verfahren nach einem der Ansprüche 1, 2 oder 3, dadurch gekennzeichnet, daß das Entschwefelungsmittel (9) durch Kalzinieren von Kalkstein und/oder Dolomit gebildet wird und daß das Kalzinieren außerhalb des Vergasers (8) durch Wärmezufuhr über das heiße Produktgas vorgenommen wird, das seinerseits dabei entschwefelt wird.

5. Verfahren nach einem der Ansprüche 1 bis 4, dadurch gekennzeichnet, daß das Produktgas vor der Staubabscheidung (27) über wenigstens einen Wärmetauscher (25) zur Erzeugung von Dampf, vorzugsweise einen Strahlungsverdampfer ohne Einbauten, geführt wird.

6. Verfahren nach einem der Ansprüche 1 bis 5, dadurch gekennzeichnet, daß das Produktgas nach weitgehender Abkühlung in Wärmetauschern (29,32) einer Waschung (33) unterworfen wird und vor der Einleitung in die Brennkammer(n) (35) der Gasturbine(n) (38) über wenigstens einen Gas/Gaswärmetauscher (32) gegen warmes Produktgas wiedererwärmt wird.

7. Verfahren nach einem der Ansprüche 1 bis 6, dadurch gekennzeichnet, daß die Kohlefeinfraktion (11) im unteren Teil des Wirbelbettreaktors (8) gemeinsam mit einem Teilstrom des Vergasungsmittels (13) eingeblasen wird.

8. Verfahren nach einem der Ansprüche 1 bis 7, dadurch gekennzeichnet, daß aus dem Produktgas abgeschiedener, weitgehend verkokter Staub unterhalb der Aufgabestelle für die Kohlefeinfraktion (11) eingeblasen wird.

9. Verfahren nach einem der Ansprüche 1 bis 8, dadurch gekennzeichnet, daß die Kohlefeinfraktion (11) durch Siebung oder Sichtung auf eine Korngröße $\leq$ 0,5 mm, vorzugsweise $\leq$ 0,3 mm hergestellt wird und daß der Siebüberlauf als körnige Kohlefraktion (7) eingesetzt wird.

10. Verfahren nach einem der Ansprüche 1 bis 9, dadurch gekennzeichnet, daß die Kohlefeinfraktion (11) durch den Staubaustrag einer Wirbelbett-Trocknung der Kohle gebildet wird, und daß der Korndurchgang der Wirbelbett-Trocknung als körnige Kohlefraktion (7) dem Vergaser (8) zugeführt wird.

11. Verfahren nach einem der Ansprüche 1 bis 10, dadurch gekennzeichnet, daß die abgezogene flüssige Schlacke (15,84) unter gleichem Druck wie im Vergaser (8) mit Wasser granuliert wird und daß der bei der Granulation der ablaufenden Schlacke entstehende Dampf als Vergasungsmittel (18) in dem Vergaser (8) eingebracht und/oder ganz oder teilweise im Wärmetausch gegen verdampfendes Wasser kondensiert und in die Schlackengranulation (16) zurückgeführt wird.

12. Verfahren nach einem der Ansprüche 1 bis 11, dadurch gekennzeichnet, daß das Produktgas größtenteils in den Brennkammern (35) einer oder mehrerer, vorzugsweise zwei, Gasturbinen (38) verbrannt wird, daß aus der (den) Brennkammer(n) (35) heiße Luft entnommen und dem Wirbelbettreaktor (8), einer Luftzerlegung (73) zur Erzeugung von Stickstoff als Inertgas und Sauerstoff zur Anreicherung der Vergasungsluft und gegebenenfalls einer Heißluft-Entspannungsturbine (48) zugeführt wird.

13. Verfahren nach Anspruch 12, dadurch gekennzeichnet, daß der dem Wirbelbettreaktor (8) zugeführte Teilstrom der Heißluft einer Verdichtung (50), vorzugsweise ohne vorherige Kühlung und anschließende Wiedererwärmung, unterworfen wird.

14. Verfahren nach Anspruch 12, dadurch gekennzeichnet, daß angereicherter Sauerstoff aus der Luftzerlegungsanlage (73) in einer Konzentration von ca. 90 Vol.% dem Vergasungsmittelstrom (13) zugesetzt wird und daß Stickstoff (74) über Verdichter (78) als Schleusgas für die Druckschleusen zur Einbringung von Kohle und Zuschlägen wie. z.B. CaO od.dgl., zum Ausbringen granulierter Schlacke, sowie zum Inertisieren od.dgl., verwendet wird.

15. Verfahren nach einem der Ansprüche 1 bis 14, dadurch gekennzeichnet, daß für die Inbetriebsetzung des Wirbelschichtreaktors (8) Trockenkohle oder Koks in den Vergaser unterteil aufgegeben, über Brenner (83) im Schlackenablauf aufgeheizt, mit Überschußluft des/der Brenner gezündet bzw. verbrannt wird und derart die Bedingungen für den Schmelzfluß der Schlacke hergestellt werden.

16. Verfahren nach einem der Ansprüche 1 bis 15, dadurch gekennzeichnet, daß gegebenenfalls durch Verbrennen eines Gasteilstromes zusätzlich erhitztes Turbinenabgas in einem Abhitzekessel (52) zur Hochdruck- und Niederdruckdampferzeugung eingesetzt wird, daß dieser Hochdruckdampf (53) gemeinsam mit dem aus der Kühlung des Gasstromes nach dem Vergaser (8) stammenden Hochdruckdampf (26,30) in einer Dampfturbine (56) eingesetzt wird, daß der so erzeugte Niederdruckdampf (54) gemeinsam mit den Niederdruckdampfströmen (31) aus der Produktgaskühlung (29), der Rückkühlung der Kühlflüssigkeit für die Vergasungsmitteldüsen (13), den Vergasermantel usw. und gegebenenfalls der Schlackenkühlung ebenfalls in die Dampfturbine (56) eingesetzt wird, daß der Dampfturbine (56) zwischen diesen beiden Druckstufen geregelt Dampf zur Einspeisung in die Brennkammer (35) der Gasturbine (38) und zur Herstellung des zusätzlich zur Vergasungsluft als Vergasungsmittel eingesetzten Dampfes entnommen wird, daß diese Dampfströme (30,53;31,54;57,58) in der Dampfturbine (56) arbeitsleistend entspannt werden und daß das Abgas aus diesem Dampferzeuger (52) ganz oder teilweise, gegebenenfalls zusammen mit entspannter Heißluft als Wärmeträgergas zur Kohletrocknung (1) geführt wird.

FIG. 1

EP 0 334 833 A1

FIG. 2

FIG. 3

FIG. 4

EP 0 334 833 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-1 558 996 (GULF OIL CORP.) * Seite 9, Zeile 30 - Seite 13, Zeile 63 * | 1 | C 10 J 3/54 C 10 J 3/00 F 02 C 3/28 |
| A | | 2,7,9, 10,11 | |
| Y | EP-A-0 190 094 (MITSUBISHI K.K.) * Seiten 7-8 * | 1 | |
| A | | 16 | |
| A | EP-A-0 062 363 (METALLGESELLSCHAFT AG) * Seite 13, Zeilen 7-26 * | 1,4,5 | |
| A | DE-A-2 909 657 (DIDIER ENGINEERING GmbH) * Seiten 6-7 * | 1 | |
| A | WO-A-8 102 303 (STORA KOPPARBERGS) * Seite 5, Zeile 10 - Seite 7, Zeile 24 * | 1,5,16 | |
| A | EP-A-0 249 233 (HITACHI LTD) * Seite 11, Zeile 26 - Seite 12, Zeile 8 * | 1,14 | RECHERCHIERTE SACHGEBIETE (Int. Cl.4) C 10 J F 02 C |
| A | DE-A-2 924 245 (RHEINISCHE BRAUNKOHLENWERKE AG) * Seiten 13-20 * | 1,5,6, 12,16 | |
| A | DE-A-2 429 993 (KRUPP-KOPPERS GmbH) | | |

Der vorliegende Recherchenbericht wurde für alle Patentansprüche erstellt

| Recherchenort | Abschlußdatum der Recherche | Prüfer |
|---|---|---|
| DEN HAAG | 28-06-1989 | WENDLING J.P. |